# EUROPEAN PATENT APPLICATION

(11) **EP 1 985 671 A1**
(43) Date of publication of application: **29.10.2008**
(21) Application number: 08251353.2
(22) Date of filing: 08.04.2008
(51) Int. Cl.: C09D 5/00

(54) **Solid surface product containing oriented reflective particles and method of making same**

(30) Priority: 24.04.2007 US 739302
(71) Applicant: The Diller Corporation, Cincinnati OH 45202 (US)
(72) Inventor: Elbon, Leonard Ray, Las Vegas, Nevada 89108 (US); Reichwein, David Paul, Elizabeth Town, Pennsylvania 17022 (US)
(74) Representative: Cummings, Sean Patrick

(57) **Abstract**

A solid surface material which exhibits a pearlescent visual appearance and method of making it are provided. The solid surface material includes a polymer resin, optionally, a filler, and oriented anisotropic pigment particles dispersed substantially throughout the polymer resin to provide the pearlescent visual appearance. The solid surface material is made by forming a mixture of polymer resin, optional filler, and anisotropic pigment particles; dispersing the pigment particles substantially throughout the mixture; casting the mixture into an open mold; applying a vacuum to the molded mixture to release entrapped gases therein to cause the pigment particles to become oriented in the mixture; and curing the molded mixture to produce the solid surface material.

## Description

The present invention relates to decorative solid surface products formed from filled or unfilled polymer resins, and more particularly to solid surface products containing oriented particles which provide a unique pearlescent visual appearance and to methods of making those products.

Decorative solid surface products formed from particle filled resins have been long known and are commonly available for use on kitchen and bathroom surfaces. In general, these materials are formed from particle filled resins, the most common resins being polyesters and polyacrylates, with the fillers ranging widely, often used to give particular visual effects to the product.

Such non-porous, solid surface products are typically commercially available in a wide variety of appearances and colors, with patterns which run throughout the thickness of the products, giving them desirable aesthetics and utility. These materials are also tough and resistant to heat, stains, mildew and impact, and can be easily repaired if damaged.

Commonly used pigments in these products are composed of small particles of inorganic compounds, often metallic oxides, which are roughly spherical in shape. Other pigments are also sometimes used, as well as fillers and larger pieces of colored material or "particulates" to provide different visual effects. Aluminum trihydrate (ATH) is often included as a preferred filler to provide translucency and whiteness to the products, as well as for its excellent fire-retardant properties.

Pearlescent buttons have been made for many years by injection molding or the like, using pearlescent and iridescent pigments. Such pigments have been used in other fields as well, such as in the manufacture of bowling balls. Commercially available pigments of this type, referred to by various names such as opalescent, pearlescent, iridescent, and interference pigments, are used to give various products a sheen, reflectivity, and three dimensional look. While these pigments have found use in solid surface materials, there have been several associated problems. Many such "pearlescent" pigments become buried in the body of the products away from the surface so that their light reflecting properties are lost. In addition, commonly available pearlescent pigments are shear sensitive, and their pearlescent effect is greatly reduced by the addition of common opacifiers or fillers used in these products, such as titanium dioxide and ATH.

More recently, solid surface products have appeared which have utilized anisotropic particles such as natural and synthetic mica. For example, Alfonso et al. in U.S. Patent Nos. 6,040,045 and 7,081,220 teach a solid surface material using filled polymer resins. The products also include translucent fire retardant (TFR) particles containing mica flakes having metal oxide coatings which enhance the pearlescent visual effects of the product. The mica flakes are taught to be oriented in the resin by casting a mixture of mica flakes, resin, and filler onto a flat plate or belt and then heating the cast material differentially from the bottom to cause the mica flakes to become oriented. The cured material is then ground into different TFR particle sizes and added to conventional solid surface products. The patentee teaches that the use of mica flakes directly in the final solid surface product does not yield the proper orientation or desired

Miller et al., U.S. Patent No. 6,515,060, is also directed to a solid surface product that contains from about 0.1 to about 30 wt% synthetic mica in a filled acrylic resin. The product is made by mixing a filler (such as ATH) with a resin syrup and the synthetic mica in a vacuum-equipped vat or mixer. The de-gassed liquid mixture is then poured into a mold, cast, and cured. However, such a method does not expose the final cast product surface area to vacuum de-gassing and allow the mica particles to effectively orient themselves.

While improvements have been made in the art, there still remains a need for solid surface products that can produce even more pronounced and striking pearlescent visual effects, and which can be made using fewer manufacturing steps.

The present invention addresses that need by providing solid surface products containing oriented particles which provide a unique pearlescent reflective appearance and methods of making those products. As used herein, the terms "pearlescent," "opalescent," "iridescent," "nacreous," and "interference" are used as synonyms for pigments that exhibit various colors depending on the angles of illumination and viewing, as observed, for example, in mother-of-pearl. As used herein, the term "anisotropic" is used to describe a particle that exhibits different visual properties when viewed at different angles and includes particles which have linear dimensions (length and/or width) that exceed their thickness. Such particles may take the form of flakes, platelets, leaves, and thin sheets.

In accordance with one aspect of the invention, a solid surface material is provided which exhibits a pearlescent visual appearance and comprises from about 25 to about 95 wt%, i.e. weight percent, of a polymer resin, from about 0 to about 70 wt% of a filler, and from about 0.1 to about 15 wt% of oriented anisotropic pigment particles dispersed substantially throughout the polymer resin to provide the pearlescent visual appearance.

While any of a number of different thermosetting polymer resins may be utilized, in a preferred form, the polymer resin is selected from the group consisting of polyester resins, polyacrylate resins, and mixtures thereof. Additionally, the fillers used in the material may also vary widely in composition. In a preferred form, the filler is selected from the group consisting of aluminum trihydrate, calcium carbonate, barium sulfate, magnesium hydroxide, talc, and mixtures thereof. Further, a number of different inorganic pigment particles, either natural or synthetic in origin, may be used. In a preferred form, the pigment particles comprise metal oxide coated mica particles.

The solid surface material has upper and lower major surfaces. Because of the novel manner in which the material is formed, the upper surface exhibits a first pearlescent visual appearance in which the pigment particles produce a pattern with relatively smaller repeating units and the lower surface exhibits a second pearlescent visual appearance in which the pigment particles produce a pattern with relatively larger repeating units.

In accordance with another aspect of the present invention, a method for producing a solid surface material having a pearlescent visual appearance is provided and includes forming a mixture of from about 25 to about 95 wt% of a polymer resin, from about 0 to about 70 wt% of a filler, and from about 0.1 to about 15 wt% of anisotropic pigment particles and dispersing the pigment particles substantially throughout the mixture; casting the mixture into an open mold; applying a vacuum to the molded mixture to release entrapped gases therein and causing the pigment particles to become oriented in the mixture; and curing the molded mixture to produce a solid surface material having a pearlescent visual appearance.

In a preferred form, the vacuum which is applied is less than about 3 pounds per square inch absolute pressure (psia) (2.07x10⁴ Pa), or a vacuum greater than about 24 inches of mercury, for about 1 to 3 minutes. The pearlescent visual appearance of the material may be controlled by either varying the level of vacuum, varying the time in which the mixture is exposed to vacuum, varying the thixotropicity and/or viscosity of the mixture, or a combination of the above. Preferably, the mixture is first gelled at ambient temperature and then cured at a temperature of from about 80 to about 100°C for from about 1 to about 4 hours.

Accordingly, it is a feature of the present invention to provide solid surface products containing oriented particles which provide a unique pearlescent reflective appearance and to methods of making those products. It is another feature of the present invention to provide nonporous solid surface products with improved dimensional stability and resultant warpage characteristics compared to those of the prior art. It is a further feature of the present invention to provide solid surface products with substantially less air voids compared to those of the prior art. Still other features and advantages of the present invention will be apparent from the following detailed description, the accompanying drawings, and the appended claims.

The following detailed description of specific embodiments of the present invention can be best understood when read in conjunction with the following drawings, where like structure is indicated with like reference numerals and in which:
Fig. 1 is a schematic cut away side view of one embodiment of the mold used in the practice of the present invention;
Fig. 2 is a schematic top view of the mold of Fig. 1;
Fig. 3 is a schematic side view of one embodiment of the vacuum chamber used in the practice of the present invention;
Fig. 4 is a cutaway side view of one embodiment of the mold loaded into the vacuum chamber; and
Fig. 5 is an enlarged cross-sectional schematic representation of the orientation of particles in the molded resin caused by the out-gassing of dissolved gases and volatiles in the resin.

Polymer resins which are useful in the practice of embodiments of the present invention are not specifically limited as long as they can be formed into a solid surface material by curing. Preferred free radical, heat curable resins particularly useful in the practice of the present invention are thermosetting unsaturated polyester resins and thermosetting polyacrylate resins, and combinations thereof. The term resin or "syrup" commonly refers to the uncured liquid state of a polymer, where said polymer is present in solution with a suitable crosslinking monomer. Examples of useful unsaturated polyester resins are reaction products of unsaturated dicarboxylic acids, or unsaturated dicarboxylic acids and saturated dicarboxylic acids, with glycols, such as maleic acid, phthalic acid and dipropylene glycol monomers respectively. Commonly, styrene is employed as the monomeric crosslinker for the polyester resins. Examples of useful polyacrylate resins include various kinds of conventional acrylic group monomers, acrylic group partial polymers, vinyl monomers for copolymerization other than acrylic group monomers, or oligomers. As the acrylic group monomer, (meth)acrylic ester is preferable. The use of methyl methacrylate monomer is preferred as the acrylic resin crosslinker. Additional useful thermosettable polymers include epoxies, urethanes, acrylo-urethanes, melamines and combinations thereof. The total amount of fluid polymerizable constituent in the castable composition of the present invention is from about 25 to about 95 wt%, and preferably from about 25 to about 45 wt%.

Exemplary polymer resins are unsaturated polyester resins, which are the reaction products of glycols and unsaturated dicarboxylic acids, or the reaction products of glycols and unsaturated dicarboxylic acids and saturated dicarboxylic acids. The glycol can comprise one or more of ethylene glycol, diethylene glycol, propylene glycol, dipropylene glycol, neopentyl glycol, 1,3-propanediol, 1,2-butanediol or 1,4-butanediol. The unsaturated dicarboxylic acid can be one or more of maleic acid, fumaric acid, and their anhydrides. The saturated dicarboxylic acid can be one or more of phthalic acid, isophthalic acid, terephthalic acid, adipic acid, succinic acid, pimelic acid, suberic acid, azelaic acid, aebacic acid, and their anhydrides. The above monomers are not considered exhaustive, but are those typically used in the art. Methods of preparing such polymers are well known by those versed in the art, and are also commercially available. The most common monomeric crosslinker, used in the resin syrup, is styrene, which is preferred in the practice of the present invention. The viscosity of the castable syrup composition is related to the molecular weight of the polymer, as well as its concentration in the monomer, which can be varied in such a way as to control the rheology of the syrup composition.

Another exemplary polymer resin is poly(methyl methacrylate). As a castable composition, it is typically introduced as a solution or syrup of the polymer preferably dissolved in methyl methacrylate monomer. As for the polyester resins previously described, methods of preparing such a polymer and syrup therefrom are well known and described in the prior art, and are both commercially available as well. The viscosity of the castable syrup composition is related to the molecular weight of the polymer, as well as its concentration in the monomer, which can be varied in such a way as to control the rheology of the syrup composition.

Other polymerizable polyacrylate monomers useful as fluid polymerizable constituents are alkyl acrylates and methacrylates in which the alkyl groups can vary from 1-18 carbon atoms, but preferably 1-4 carbon atoms. Suitable acrylic monomers are methyl acrylate; ethyl acrylate and methacrylate; n-propyl and i-propyl acrylates and methacrylates; n-butyl, 2-butyl, i-butyl and t-butyl acrylates and methacrylates; 2-ethylhexyl acrylate and methacrylate; cyclohexyl acrylate and methacrylate; omega-hydroxyalkyl acrylates and methacrylates; N,N-dialkylaminoalkyl acrylates and methacrylates; N-[t-butyl]aminoethyl acrylate and methacrylate; styrene; vinyl acetate; acrylonitrile, methacrylonitrile; acrylamide and methacrylamide; allyl acrylate and methacrylate; divinylbenzene and divinyltoluene. The above reactive monomers are not considered exhaustive, but are those typically used in the art.

Incorporation of orientable anisotropic particles into the polymer resin allows the creation of additional visual aesthetics, including pearlescent, opalescent, nacreous, and/or iridescent appearances. The anisotropic particles have different physical and visual properties when viewed from different directions. For example, the particles can have an appearance that varies depending on the angle of observation. The particles preferably have an aspect ratio of at least 3. It will be appreciated that the patterns in the decorative solid surface materials that are produced have a three dimensional appearance which is distinct from patterns obtained by applying decals, appliques and paint to a surface.

These particles have an aspect ratio such that the particles become oriented by the out-gassing of dissolved air and volatile compounds when processed as described in further detail below. As used herein, aspect ratio is the largest dimension of the particle (typically length) divided by the smallest dimension (typically thickness). The particles also have a different aesthetic effect when aligned at various angles relative to the material surface and to the viewer. These effects may be due to angle dependent reflectivity, angle dependent color absorption/reflection, or visible shape.

Examples of suitable particles which produce the pearlescent visual appearance patterns include, but are not limited to minerals (such as, for example, mica, synthetic mica, alumina, silica, etc.), glasses, ceramics, or other natural or synthetic substrates coated with various materials (such as, for example, metal oxides, pigments, dyes, etc.) which provide variations in reflectivity, interference patterns or selective color absorption. Said particles constitute from about 0.1 to about 15 wt%, and preferably from about 0.9 to about 3.0 wt%.

While the solid surface material can be unfilled, it is preferred in some embodiments to include a filler. Suitable fillers include, for example, aluminum trihydrate, calcium carbonate, titanium dioxide, barium sulfate, magnesium hydroxide, and talc, which as examples, are not considered to be exhaustive and not intended to limit the scope of the claimed invention. Fillers can be present in amounts of from between about 0 to about 70 wt%. Preferably, fillers are added to the composition in amounts from about 50 to about 70 wt%.

It is also known to include in solid surface materials other additives such as pigments, dyes, flame retardant agents, release agents, fluidizing agents, viscosity control agents, curing agents, antioxidants, toughening agents, and the like as is well known to those of ordinary skill in the art. For example, additional pigments having differing or contrasting colors from the oriented anisotropic pigments particles may be added to the composition to produce a "family" of different colored solid surface products having the pearlescent visual appearance. The inclusion of minor amounts of any or all of these additives is contemplated.

In producing the solid surface material, the polymer resin, preferably in syrup form, is mixed optionally with a filler, the orientable anisotropic pigment particles, and any other conventional additives deemed beneficial. From about 25 to about 95 wt% of the polymer resin, from about 0 to about 70 wt% of the filler, and from about 0.1 to about 15 wt% of the orientable anisotropic pigment particles, and preferably from about 25 to about 45 wt% of the polymer resin, from about 50 to about 70 wt% of the filler, and from about 0.9 to about 3.0 wt% of the orientable anisotropic pigment particles, are mixed together, and the particles are dispersed substantially throughout the polymer resin. In a preferred embodiment of the present invention, a mixture from about 80 to about 90 wt% polyester resin syrup, and from about 10 to about 20 wt% polyacrylate resin syrup is employed as the polymer constituent of the blend, wherein the polyester resin tends to impart toughness and the acrylic resin tends to impart flexibility to the final cured product. Any suitable mixing method may be used, including a dispersing-type blade mixer, kneading mixer, screw mixer, or double planetary mixer. A suitable curing catalyst is also preferably added to the mixture, with the catalyst type and concentration being matched to the particular polymer or polymers, and processing conditions, being used.

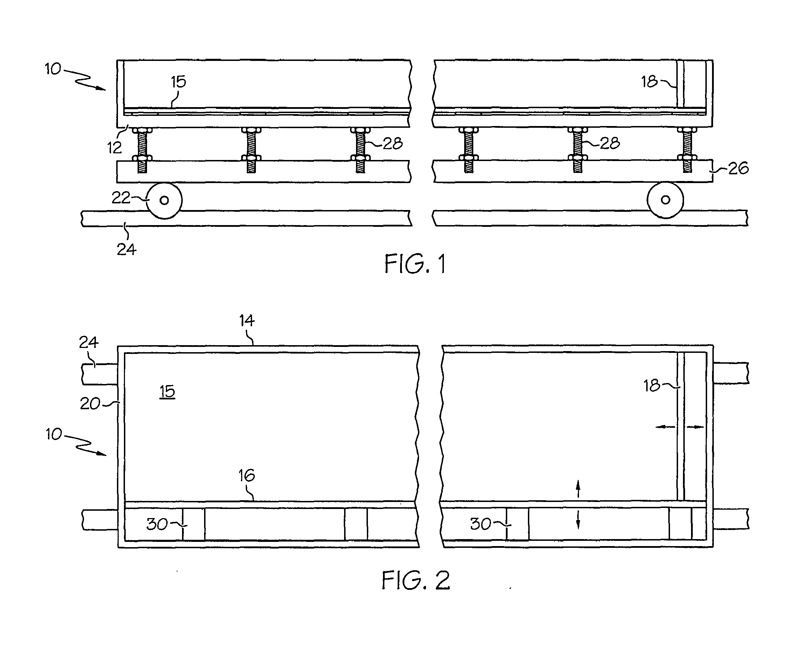

The syrup mixture is dispensed from the mixing vessel and cast into a suitable open mold which is sized to provide a sheet of solid surface material having the desired length, width, and thickness dimensions. In a preferred embodiment as shown in Fig. 1, the base **12** of the mold **10** supports a smooth, flat surface **15** such as a large pane of glass or sheet of polished metal. Typical dimensions for the glass are up to 60 inches (152 cm) wide and up to 160 inches (406 cm) in length. The mold **10** includes side walls **14** and **16** and end walls **18** and **20.** Preferably at least one moveable side wall **16** and at least one moveable end wall **18** are provided. This provides flexibility in the sizes of sheets of the solid surface material which can be cast. The side and end walls are of a height which is greater than a typical cast thickness for the solid surface material. The walls may be of metal or plastic and are designed to act as a dam for the liquid resin composition as it is cast into the mold. A suitable mold release agent may be applied to the base and walls of the mold to aid in the removal of the solid surface material once it has been cured.

As shown in Fig. 1, mold **10** can be equipped with means for moving the mold such as caster wheels **22** positioned on rails **24.** The caster wheels **22** are attached to a frame **26** which includes a plurality of leveling bolts **28.** The leveling bolts are used to maintain the mold in a level, horizontal orientation during casting and curing of the resin mixture.

As best shown in Fig. 2, side wall **16** and end wall **18** are moveable to adjust the length and width of the cast composition. For example, different length blocks **30** may be used to secure the moveable side and end walls into proper position. Alternatively, other mechanical devices such as clamps or bolts (not shown) may be used to adjust and then secure the moveable side and end wall as needed.

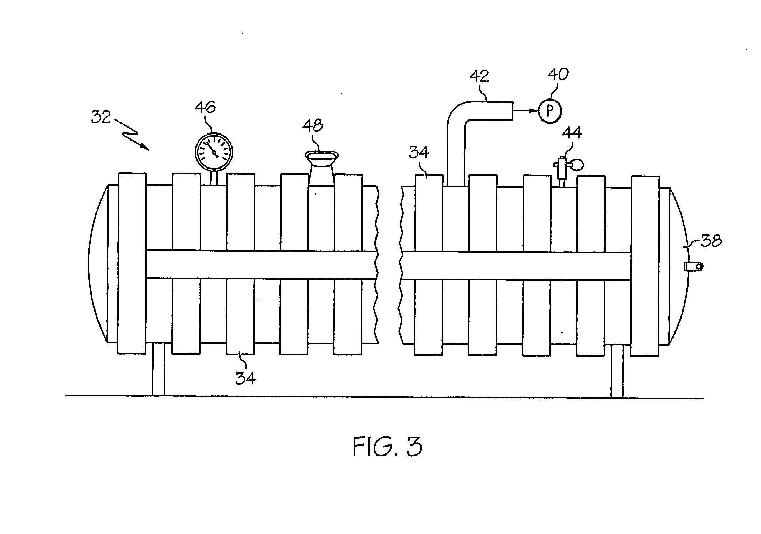

Fig. 3 depicts a suitable vacuum chamber **32** which can be used in the practice of the invention. While one form of a vacuum chamber is shown by example only, it will be apparent to those skilled in this art that other forms of vacuum chambers may be utilized. Chamber **32** is fabricated of a suitable material such as steel, including reinforcing ribs **34.** The chamber may be equipped with a hinged door **38** which is gasketed to permit an air-tight seal to be made when the door is closed. The chamber **32** is connected to a source of vacuum such as a vacuum pump **40** through vacuum line **42.** Chamber **32** is also be equipped with a vent valve **44** to control the level of vacuum in the chamber, and a vacuum gauge **46** to permit an operator to monitor and adjust the level of vacuum as needed. As shown, the chamber **32** may also be provided with a sight glass **48** which permits an operator to view the progress of the orientation of the anisotropic pigment particles in the molded resin composition mixture.

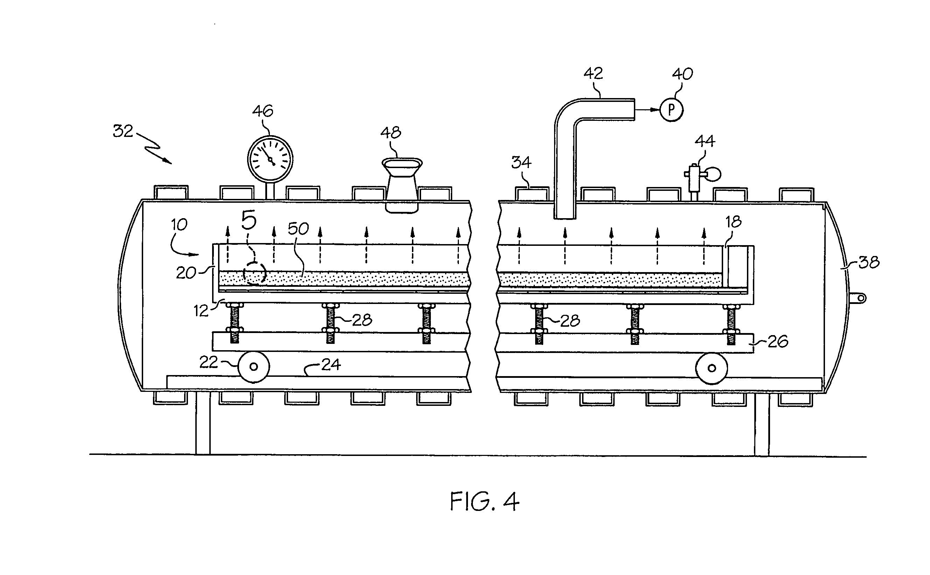

As best shown in Fig. 4, the mold **10,** containing the cast polymer mixture **50,** is placed into vacuum chamber **32** that is sized to be able to completely contain the mold. In the exemplary equipment shown in the drawings, the mold may be supported on wheeled casters on rails so that it can be conveniently rolled into and out of chamber **32.** Once mold **10** has been loaded into chamber **32,** a vacuum is applied using pump **40** through vacuum line **42.** As pressure in the chamber is reduced, air and volatile materials (such as monomers) dissolved or entrapped in the liquid polymer resin syrup are "boiled" or stripped off of the cast material as depicted by the vertical arrows (drawn in phantom lines) in Fig. 4.

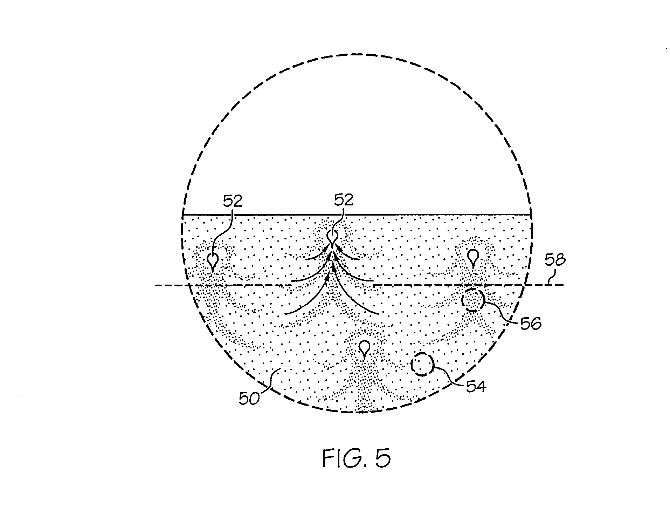

This boiling and out-gassing action creates turbulence within the cast liquid material and causes the dispersed anisotropic pigment particles to become oriented and aligned in the viscous liquid polymer. This turbulence and orientation is depicted schematically in Fig. 5, wherein the turbulence, as shown by the arrows, is caused by the flow of minute air and volatile material gas bubbles **52** towards the surface of liquid resin composition **50,** and acts to alter the dispersion of the anisotropic particles from an essentially uniform initial state **54** to a non-uniformly distributed oriented state **56.** Generally, the applied vacuum is less than about 3 psia pressure. Application of the vacuum for from about 1 to about 3 minutes will typically be sufficient to cause the anisotropic pigment particles to become substantially oriented. Also depicted in Fig. 5 is a sanding and polishing plane **58,** where the final surface finishing operation further exposes and highlights the desired pearlescent pattern effect of the present invention.

The degree of orientation and the size of the visual pattern which is produced by the pigment particles may be controlled in a number of ways. For example, the level of vacuum which is applied may be varied. Alternatively, or in addition, the time that the cast material is exposed to the vacuum may also be varied. Characteristics of the liquid resin may also be manipulated to vary the size and visual effect. For example, the viscosity or thixotropicity of the resin may be varied to control the size of the visual pattern that is produced.

Another important benefit of degassing and deaerating the cast liquid resin in situ in the mold by means of a vacuum chamber, rather than vacuum deaeration of the bulk resin composition in its mixing vessel before dispensing the resin to the mold, as taught in the prior art, is that reaeration of the resin during the pouring process is avoided, and the actual deaeration process is considerably more efficient and effective, with at least about 50 times the surface area of the liquid resin exposed to the vacuum atmosphere, analogous to a thin film evaporation process. As a result, the final cast and cured solid surface product contains substantially fewer air bubble voids than sheets produced using prior art methods.

After sufficient time is allowed for the out-gassing to orient the anisotropic particles in the resin, the vacuum is released by stopping and isolating vacuum pump **40** and opening vent valve **44,** and the mold **10** is then removed from vacuum chamber **32** by opening door **38** and rolling the mold out of the chamber. The cast resin **50** is permitted to gel and harden at ambient temperature for a period of time, typically from about 30 minutes to about 3 hours. Once the resin has substantially completely solidified or set, the solid surface material sheet is de-molded and placed in a "post-cure" oven (not shown) to complete the polymerization and curing process.

Post-curing is typically carried out at temperatures of from about 80 to about 100°C for a period of from about 1 to about 4 hours, depending on the size, thickness, and composition of the solid surface material. Preferably, heating of the post-cure oven is accomplished by re-circulation of hot air over the curing material. Cooling then takes place gradually, typically by reducing the temperature of that recirculating oven air at the rate of approximately 1°F (0.5°C) per minute. The cast and cured solid surface material sheet is preferably cooled down to at least 115°F (46°C) before removal from the oven. The controlled gradual cooling or annealing results in substantially less internal stresses in the final cured sheet, which significantly improves its dimensional stability and reduces the possibily of sheet warpage compared to prior art solid surface sheet products.

The resulting solid surface sheets are then sanded and polished and their edges trimmed. The sheet provides a pearlescent visual appearance on both surfaces thereof and can be used for a variety of decorative surfacing end uses. Typically, while Fig. 5 depicts sanding and polishing of the top surface of the solid surface sheet as positioned in the mold, it is the bottom surface of the sheet, which has been cast against the glass pane or polished steel sheet **15** in mold **10** (as shown in Fig. 1), exhibiting the relatively larger repeating pearlescent units, that is sanded and polished after demolding, flipping and oven curing, and preferably provides the primary decorative surface of the solid surface sheet of the present invention. Alternatively, the sheets can be ground into smaller particles and incorporated as additives and fillers in other cast solid surface sheets of alternative designs.

It is noted that terms like "preferably," "commonly," and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

For the purposes of describing and defining the present invention it is noted that the term "substantially" is utilized herein to represent the inherent degree of uncertainty that may be attributed to any quantitative comparison, value, measurement, or other representation. The term "substantially" is also utilized herein to represent the degree by which a quantitative representation may vary from a stated reference without resulting in a change in the basic function of the subject matter at issue.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

## Claims

1. A solid surface material having a pearlescent visual appearance comprising, from about 25 to about 95 wt% of a polymer resin, from about 0 to about 70 wt% of a filler, and from about 0.1 to about 15 wt% of oriented anisotropic pigment particles dispersed substantially throughout the polymer resin to provide said pearlescent visual appearance.

2. A solid surface material as claimed in claim 1, wherein said polymer resin comprises a blend of from about 80 to about 90 wt% polyester and from about 10 to about 20 wt% polyacrylate.

3. A solid surface material as claimed in claim 1 or claim 2, in which said filler is selected from the group consisting of aluminum trihydrate, calcium carbonate, barium sulfate, magnesium hydroxide, talc, and mixtures thereof.

4. A solid surface material as claimed in any preceding claim, in which said polymer resin comprises from about 25 to about 45 wt%, said filler comprise from about 50 to about 70 wt%, and said oriented pigment particles comprise from about 0.9 to about 3.0 wt% of said solid surface material.

5. A solid surface material as claimed in any preceding claim, in which said oriented pigment particles comprise metal oxide coated mica flakes.

6. A solid surface material as claimed in any preceding claim, having upper and lower major surfaces, and wherein the upper surface exhibits a first visual appearance in which said pigment particles produce a pattern with relatively smaller repeating units and the lower surface exhibits a second visual appearance in which said pigment particles produce a pattern with relatively larger repeating units.

7. A method for producing a solid surface material having a pearlescent visual appearance comprising, forming a mixture of from about 25 to about 95 wt% of a polymer resin, from about 0 to about 70 wt% of a filler, and from about 0.1 to about 15 wt% of anisotropic pigment particles and dispersing said pigment particles substantially throughout said mixture, casting said mixture into an open mold, applying a vacuum to the molded mixture to release entrapped gases in said molded mixture, causing said pigment particles to become oriented in said mixture, and curing said molded mixture to produce a solid surface material having a pearlescent visual appearance.

8. A method as claimed in claim 7, wherein said polymer resin comprises a blend of from about 80 to about 90 wt% polyester and from about 10 to about 20 wt% polyacrylate.

9. A method as claimed in claim 7 or claim 8, in which said filler is selected from the group consisting of aluminum trihydrate, calcium carbonate, barium sulfate, magnesium hydroxide, talc, and mixtures thereof.

10. A method as claimed in any of claims 7 to 9, in which said polymer resin comprises from about 25 to about 45 wt%, said filler comprise from about 50 to about 70 wt%, and said oriented pigment particles comprise from about 0.9 to about 3.0 wt% of said solid surface material.

11. A method as claimed in any of claims 7 to 10, in which said oriented pigment particles comprise metal oxide coated mica flakes.

12. A method as claimed in any of claims 7 to 11, in which the amount of vacuum is varied to control the size of a visual pattern which is produced.

13. A method as claimed in any of claims 7 to 12, in which the amount of time to which the molded mixture is exposed to vacuum is varied to control the size of a visual pattern which is produced.

14. A method as claimed in any of claims 7 to 13, in which a thixotropic index of said mixture is varied to control the size of a visual pattern which is produced.

15. A method as claimed in any of claims 7 to 14, in which viscosity of said mixture is varied to control the size of a visual pattern which is produced.
